# EUROPEAN PATENT APPLICATION

(11) **EP 1 345 339 A1**
(43) Date of publication of application: **17.09.2003**
(21) Application number: 01271707.0
(22) Date of filing: 17.12.2001
(51) Int. Cl.: H04B 7/26

(54) **RADIO SYSTEM, RADIO DEVICE, RADIO CONNECTION METHOD, PROGRAM, AND MEDIUM**

(30) Priority: 21.12.2000 JP 2000388167
(71) Applicant: MATSUSHITA ELECTRIC INDUSTRIAL CO., LTD., Kadoma-shi, Osaka 571-8501 (JP)
(72) Inventor: NAKATSUKA, Monta, Kadoma-shi, Osaka 571-8504 (JP)
(74) Representative: Grünecker, Kinkeldey, Stockmair & Schwanhäusser Anwaltssozietät
(86) International application number: JP0111013
(87) International publication number: WO02051039

(57) **Abstract**

Constant efforts have been made to reduce a size of electronic equipment incorporating a radio device. However, it has been impossible to simply and reliably establish a radio connection between pieces of electronic equipment. There are provided a radio system including a plurality of first radio devices that have statuses thereof changed at the time of receiving a predetermined signal, and a second radio device that has an input device 11 of sequentially transmitting a status change command as the predetermined command in order to establish a radio connection, the status change command causing all or some of the plurality of first radio devices to have statuses thereof changed. The status changes are externally output by the first radio devices receiving the status change command. A first radio device to act as a target of the radio connection is determined on the basis of information related to the externally output status changes.

## Description

### Technical Field

The present invention relates to a radio system, a radio device, a radio connection method, a program, and a medium which are used, for example, for low-power high-frequency radio connections that replace connection cables.

### Background Art

Technologies have advanced markedly in recent years. In particular, constant attempts have been made to reduce the size of electronic equipment, and more and more pieces of such equipment are portable. One example of such equipment is a cellular phone. Furthermore, there have been growing needs specific to mobile communications using cellular phones or the like. On the other hand, owing to cumbersome handling of connection cables, low-power-consumption short-distance radio data links of different types have been developed.

A typical radio data link is based on Bluetooth.

The Bluetooth is a radio interface that uses a 2 .4-GHz band, which requires no license, for a carrier frequency. Corporations throughout the world participate in the Bluetooth SIG (Special Interest Group) so that any products in any countries can be connected together without any wires. Further, the Bluetooth is attractive because of the use of small inexpensive modules that consume reduced power.

Thus, radio devices including such hardware and communication protocols can be used for electronic equipment in any fields including not only cellular phones but also small-sized information equipment represented by notebook personal computers and PDAs (Personal Digital Assistants).

Then, a conventional radio connection operation using the Bluetooth will be described.

If two pieces of electronic equipment both incorporating a radio device connect to each other for the first time, the piece of equipment acting as a host issues a target confirmation command from an input device to a software section in order to identify the piece of equipment acting as a target.

Upon receiving the command, the software section controls a radio hardware section to provide a radio electric wave used to check whether or not any piece of electronic equipment is present to which the host can be connected.

Upon receiving the radio electric wave, a piece of electronic equipment located in a connectable area returns unique information such as its own device address to the host.

Then, upon receiving the information, the radio hardware section of the host transmits the information to the software section. Further, the software section stores the information on the electronic equipment to which the host can be connected, in a database by a certain sorting operation.

Then, by using an output device such as a liquid crystal monitor, a user checks whether or not the electronic equipment to which the host can be connected contains the desired target electronic equipment. Subsequently, when the user indicates information such as the device address of the desired equipment, a radio connection can be made on the basis of the indicated information.

As described above, a radio device including these hardware and communication protocol can be used for electronic equipment in many fields. Thus, the inventor has been considering application of such a radio device to a specific example in which for example, the electronic equipment acting as a host is a wireless headphone, while the electronic equipment acting as a target is a portable MD player.

However, suchelectronicequipment, the size of which has been constantly decreasing, is not necessarily provided with a liquid crystal monitor as previously described. For example, wireless headphones are usually never provided with any liquid crystal monitor.

Accordingly, it is difficult to check how two pieces of electronic equipment control each other in order to achieve a reliable radio connection. A group of products using such a radio data link still take up only a small percentage of the products in the world. Consequently, these products remain to be developed together with their marketability; the size of the hardware and module unit prices must be further reduced. Thus, since the size of electronic equipment incorporating a radio device has been constantly decreasing, it has been desirable that reliable radio connections be established using simple control devices such as a simplified input device such as a button, used to control the radio device, and a simplified display, used to check the control status.

### Disclosure of the Invention

For example, in view of these conventional problems, it is an object of the present invention to provide a radio system, a radio device, a radio connection method, a program, and a medium which are used to allow radio connections to be simply and reliably established between pieces of electronic equipment.

A first invention of the present invention (corresponding to Claim 1) is a radio system comprising:
a plurality of first radio devices that have statuses thereof changed at the time of receiving a predetermined signal; and
a second radio device that has status change command transmitting means of sequentially transmitting a status change command for causing said statuses changed, as said. predetermined signal, to all or some of said plurality of first radio devices, in order to establish a radio connection,
wherein said status changes are externally output by said first radio devices receiving said status change command, and
a first radio device to act as a target of said radio connection is determined on the basis of information related to said externally output status changes.

A second invention of the present invention (corresponding to Claim 2) is the radio system according to the first invention,
wherein said status changes are externally output by using all or some of light emission, sound, and vibration, and
said related information is a command from an operator recognizing all or some of the light emission, sound, and vibration.

A third invention of the present invention (corresponding to Claim 3) is the radio system according to the first invention, comprising database means of storing identification information on all or some of said plurality of first radio devices, in a database,
wherein said status change command is sequentially transmitted by sequentially changing the first radio device to which said status change command is transmitted, on the basis of said identification information stored in the database.

A fourth invention of the present invention (corresponding to Claim 4) is a radio device, comprising status change command transmitting means of sequentially transmitting, to all or some of a plurality of first radio devices having statuses thereof changed at the time of obtaining a predetermined signal, a status change command for causing said statuses changed, as a predetermined signal, in order to establish a radio connection,
wherein said status changes are externally output by said first radio devices receiving said status change command, and
a first radio device to act as a target of said radio connection is determined on the basis of information related to said externally output status changes.

A fifth invention of the present invention (corresponding to Claim 5) is a radio device to receive a status change command sequentially transmitted, in order to establish a radio connection, as a predetermined signal by a second radio device to all or some of a plurality of radio devices having statuses thereof changed at the time of obtaining said predetermined signal;
comprising status change externally output means of externally outputting said status changes, when said status change command being received, and
wherein a radio device to act as a target of said radio connection is determined on the basis of information related to said externally output status changes.

A sixth invention of the present invention (corresponding to Claim 6) is a radio system comprising:
a plurality of radio devices allowing a radio connection to be established; and
a first radio device having display means of displaying identification information on said plurality of radio devices allowing a radio connection to be established, and identifying means of identifying, of said plurality of radio devices allowing a radio connection to be established, radio devices on which said radio connection is carried out, on the basis of said displayed identification information,
wherein said first radio device provides a notice relating to execution of said radio connection, to all or some of said identified radio devices on which the radio connection is carried out.

A seventh invention of the present invention (corresponding to Claim 7) is the radio system according to the sixth invention,
wherein said radio devices on which said radio connection is carried out are a radio device to act as a host and a radio device to act as a target,
said identification information has at least address information, and
said notice relating to said execution of said radio connection is a notice to said radio device to act as a host of address information on said radio device to act as a target, provided using said radio connection from said first radio device to said radio device to act as a host.

An eighth invention of the present invention (corresponding to Claim 8) is the radio system according to the seventh invention, wherein said address information on said radio device to act as a target is obtained using said radio connection from said first radio device to said radio device to act as a target.

A ninth invention of the present invention (corresponding to Claim 9) is the radio system according to the eighth invention, wherein after the notice of said address information on said radio device to act as a target has been provided, a switch roll is carried out between said first radio device and said radio device to act as a host in order to reverse a master and slave relationship.

A tenth invention of the present invention (corresponding to Claim 10) is a radio device comprising:
display means of displaying identification information on a plurality of radio devices allowing a radio connection to be established; and
identifying means of identifying, of said plurality of radio devices allowing a radio connection to be established, radio devices on which said radio connection is carried out, on the basis of said displayed identification information,
wherein a notice relating to execution of said radio connection is provided to all or some of said identified radio devices on which the radio connection is carried out.

An eleventh invention of the present invention (corresponding to Claim 11) is a radio device comprising identification information input means in order to receive an input of identification information on radio devices on which a radio connection thereto is carried out, from a first radio device that causes said radio connection to be carried out on all or some of a plurality of radio devices allowing a radio connection to be established.

A twelfth invention of the present invention (corresponding to Claim 12) is a radio device, comprising identification information output means of outputting its own identification information, to a first radio device that causes a radio connection to be carried out on all or some of a plurality of radio devices allowing a radio connection to be established.

A thirteenth invention of the present invention (corresponding to Claim 13) is a radio system comprising, of a plurality of radio devices allowing a radio connection to be established, a plurality of radio devices, each of which has I/O means of outputting its own identification information and/or receiving an input of identification information on a target on which a radio connection is to be carried out, using a connection based on a method different from said radio connection,
wherein said connection based on said different method is used to start said radio connection.

A fourteenth invention of the present invention (corresponding to Claim 14) is the radio system according to the thirteenth invention,
wherein said plurality of radio devices allowing a radio connection to be established are a radio device to act as a host and a radio device to act as a target,
I/O means possessed by said radio devices to act as a target outputs its own identification information,
I/O means possessed by said radio device to act as a host receives an input of identification information on said radio device to act as a target, and
said radio device to act as a host and/or said radio device to act as a target has display means of externally displaying progress of input or output of identification information through said connection based on said different method.

A fifteenth invention of the present invention (corresponding to Claim 15) is the radio system according to the thirteenth invention, wherein said I/O means (1) carries out said output using a write of said its own identification information in a removable memory and/or (2)carries out said input using a read of identification information on said target radio device which has been written in said removable memory.

A sixteenth invention of the present invention (corresponding to Claim 16) is a radio device comprising I/O means of receiving an input of identification information on a target to which a radio connection is to be established, of a plurality of radio devices allowing a radio connection to be established and/or outputting its own identification information, by using a connection based on a method different from said radio connection,
wherein said connection based on said different method is used to start said radio connection.

A seventeenth invention of the present invention (corresponding to Claim 17) is the radio device according to the sixteenth invention,
wherein said I/O means receives at least an input of identification information on said target on which said radio connection is to be carried out, and
comprising database means of storing, in a database, identification information on all or some of said plurality of radio devices allowing a radio connection to be established, and
said input identification information is stored in said database.

An eighteenth invention of the present invention (corresponding to Claim 18) is a radio connection method comprising a step of sequentially transmitting, to all or some of a plurality of first radio devices having statuses thereof changed at the time of obtaining a predetermined signal, a status change command for causing said statuses changed, as a predetermined signal, in order to establish a radio connection,
wherein said status changes are externally output by said first radio devices receiving said status change command, and
a first radio device to act as a target of said radio connection is determined on the basis of information related to said externally output status changes.

A nineteenth invention of the present invention (corresponding to Claim 19) is a radio connection method comprising:
a first step of receiving a status change command sequentially transmitted, in order to establish a radio connection, as a predetermined signal by a second radio device to all or some of a plurality of radio devices having statuses thereof changed at the time of obtaining said predetermined signal and,
a second step of externally outputting said status changes when said status change command is received,
wherein a first radio device to act as a target of said radio connection is determined on the basis of information related to said externally output status changes.

A twentieth invention of the present invention (corresponding to Claim 20) is a radio connection method comprising:
a first step of displaying identification information on a plurality of radio devices allowing a radio connection to be established;
a second step of identifying, of said plurality of radio devices allowing a radio connection to be established, radio devices on which said radio connection is carried out, on the basis of said displayed identification information; and
a third step of providing a notice relating to execution of said radio connection to all or some of said identified radio devices on which the radio connection is carried out.

A twenty-first invention of the present invention (corresponding to Claim 21) is a radio connection method comprising a step of receiving, from a first radio device that causes said radio connection to be carried out on all or some of a plurality of radio devices allowing a radio connection to be established, an input of identification information on radio devices on which said radio connection thereto is carried out.

A twenty-second invention of the present invention (corresponding to Claim 22) is a radio connection method comprising a step of outputting its own identification information, to a first radio device that causes a radio connection to be carried out on all or some of a plurality of radio devices allowing a radio connection to be established.

A twenty-third invention of the present invention (corresponding to Claim 23) is a radio connection method comprising a step of receiving an input of identification information on a target on which a radio connection is to be carried out, of a plurality of radio devices allowing a radio connection to be established, and/or outputting its own identification information, by using a connection based on a method different from said radio connection,
wherein said connection based on said different method is used to start said radio connection.

A twenty-fourth invention of the present invention (corresponding to Claim 24) is a program allowing a computer to execute all or a part of the step of sequentially transmitting, to all or some of a plurality of first radio devices having statuses thereof changed at the time of obtaining a predetermined signal, a status change command for causing said statuses changed, as a predetermined signal, in order to establish a radio connection, the step belonging to a radio connection method according to the eighteenth invention.

A twenty-fifth invention of the present invention (corresponding to Claim 25) is a program allowing a computer to execute all or a part of the first step of receiving a status change command sequentially transmitted, in order to establish a radio connection, as a predetermined signal by a second radio device to all or some of a plurality of radio devices having statuses thereof changed at the time of obtaining said predetermined signal, and of the second step of externally outputting said status changes when said status change command is received, the first and second steps belonging to a radio connection method according to the nineteenth invention.

A twenty-sixth invention of the present invention (corresponding to Claim 26) is a program allowing a computer to execute all or a part of the first step of displaying identification information on a plurality of radio devices allowing a radio connection to be established, of the second step of identifying, of said plurality of radio devices allowing a radio connection to be established, radio devices on which said radio connection is carried out, on the basis of said displayed identification information, and of the third step of providing a notice relating to execution of said radio connection to all or some of said identified radio devices on which the radio connection is carried out, the first, second, and third steps belonging to a radio connection method according to the twentieth invention.

A twenty-seventh invention (corresponding to Claim 27) is a program allowing a computer to execute all or a part of the step of receiving, from a first radio device that causes said radio connection to be carried out on all or some of a plurality of radio devices allowing a radio connection to be established, an input of identification information on radio devices on which said radio connection thereto is carried out, the step belonging to a radio connection method according to the twenty-first invention.

A twenty-eighth invention of the present invention (corresponding to Claim 28) is a program allowing a computer to execute all or a part of the step of outputting its own identification information, to a first radio device that causes a radio connection to be carried out on all or some of a plurality of radio devices allowing a radio connection to be established, the step belonging to a radio connection method according to the twenty-second invention.

A twenty-ninth invention of the present invention (corresponding to Claim 29) is a program allowing a computer to execute all or a part of the step of receiving an input of identification information on a target on which a radio connection is to be carried out, of a plurality of radio devices allowing a radio connection to be established, and/or outputting its own identification information, by using a connection based on a method different from said radio connection, the step belonging to a radio connection method according to the twenty-third invention.

A thirtieth invention of the present invention (corresponding to Claim 30) is a computer processed medium carrying a program allowing a computer to execute all or a part of the step of sequentially transmitting, to all or some of a plurality of first radio devices having statuses thereof changed at the time of obtaining a predetermined signal, a status change command for causing said statuses changed, as a predetermined signal, in order to establish a radio connection, the step belonging to a radio connection method according to the eighteenth invention.

A thirty-first invention of the present invention (corresponding to Claim 31) is a computer processed medium carrying a program allowing a computer to execute all or a part of the first step of receiving a status change command sequentially transmitted, in order to establish a radio connection, as a predetermined signal by a second radio device to all or some of a plurality of radio devices having statuses thereof changed at the time of obtaining said predetermined signal, and of the second step of externally outputting said status changes when said status change command is received, the first and second steps belonging to a radio connection method according to the nineteenth invention.

A thirty-second invention of the present invention (corresponding to Claim 32) is a computer processed medium carrying a program allowing a computer to execute all or a part of the first step of displaying identification information on a plurality of radio devices allowing a radio connection to be established, of the second step of identifying, of said plurality of radio devices allowing a radio connection to be established, radio devices on which said radio connection is carried out, on the basis of said displayed identification information, and of the third step of providing a notice relating to execution of said radio connection to all or some of said identified radio devices on which the radio connection is carried out, the first, second, and third steps belonging to a radio connection method according to the twentieth invention.

A thirty-third invention of the present invention (corresponding to Claim 33) is a computer processed medium carrying a program allowing a computer to execute all or a part of a step of the step of receiving, from a first radio device that causes said radio connection to be carried out on all or some of a plurality of radio devices allowing a radio connection to be established, an input of identification information on radio devices on which said radio connection thereto is carried out, the step belonging to a radio connection method according to the twenty-first invention.

A thirty-fourth invention of the present invention (corresponding to Claim 34) is a computer processed medium carrying a program allowing a computer to execute all or a part of the step of outputting its own identification information, to a first radio device that causes a radio connection to be carried out on all or some of a plurality of radio devices allowing a radio connection to be establish, the step belonging to a radio connection method according to the twenty-second invention.

A thirty-fifth invention of the present invention (corresponding to Claim 35) is a computer processed medium carrying a program allowing a computer to execute all or a part of the step of receiving an input of identification information on a target on which a radio connection is to be carried out, of a plurality of radio devices allowing a radio connection to be established, and/or outputting its own identification information, by using a connection based on a method different from said radio connection, the step belonging to a radio connection method according to the twenty-third inveniton.

### Brief Description of the Drawings

Figure 1 is a block diagram of a radio device according to Embodiment 1 of the present invention;
Figure 2 is a schematic diagram illustrating a radio connection operation performed by a software section 14;
Figure 3 is a schematic diagram illustrating a radio connection operation according to Embodiment 2 of the present invention;
Figure 4 is a schematic diagram illustrating a radio connection operation using switch roll according to the present invention;
Figure 5 is a block diagram of a radio device according to Embodiment 3 of the present invention;
Figure 6(a) is a schematic diagram illustrating a relationship between pieces of equipment 61 and 62 , which are not connected together;
Figure 6(b) is a schematic diagram illustrating a relationship between the pieces of equipment 61 and 62, which are connected together;
Figure 7 is a diagram illustrating a radio connection operation according to Embodiment 1 of the present invention;
Figure 8 is a diagram illustrating a radio connection operation according to Embodiment 2 of the present invention;
Figure 9 is a diagram illustrating a radio connection operation utilizing a switch roll operation according to the present invention;
Figure 10 is a diagram illustrating a radio connection operation according to Embodiment 3 of the present invention; and

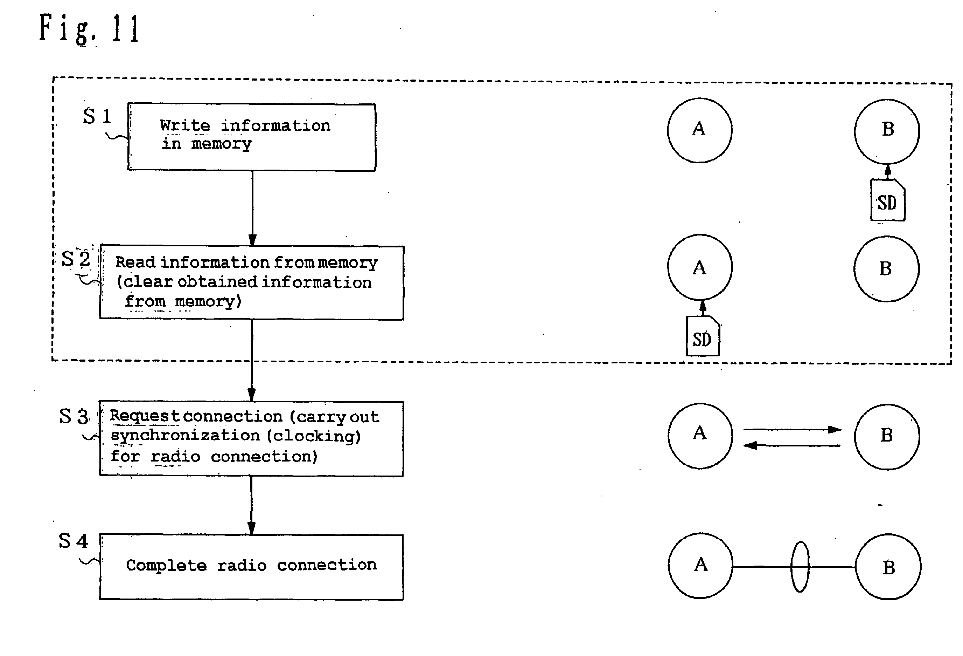

Figure 11 is a diagram illustrating a radio connection operation utilizing an SD card according to the present invention.

### (Description of Symbols)

11 Input device
12 Output device
13 Man-machine interface
14 Software section
15 Hardware control interface
16 Radio hardware section
21 Signal from input device
22 Address selecting means
23 Address database
24 Signal to radio hardware section
31, 32,33, 61, and 62 Electronic equipment incorporating radio device
51 Other device
631, 632 Devices with physical contacts

### Best Modes for Carrying out the Invention

Embodiments according to the present invention will be described below with reference to the drawings.

### (Embodiment 1)

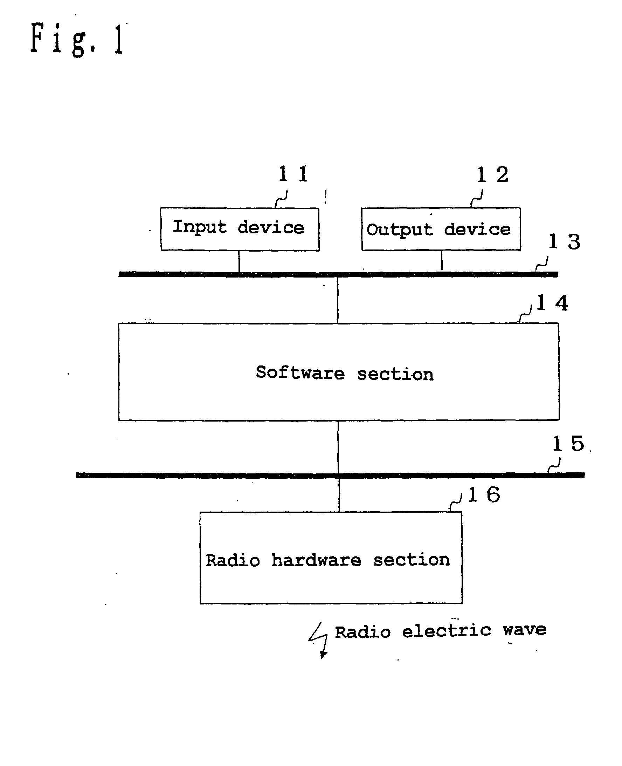

First, a configuration of a radio device according to Embodiment 1 will be described with reference to Figure 1, showing the configuration of this radio device.

In Figure 1, reference numeral 16 denotes a radio hardware section including an antenna or the like to transmit and receive radio electric waves. Reference numeral 14 denotes a software section that controls the radio hardware section 16. A hardware control interface (HCI) 15 is an interface that acts as an interface between the radio hardware section 16 and the software section 14. Further, the software section 14 is connected to an input device 11 such as a button and an output device 12 such as a light emitting diode (LED) via a man-machine interface (MMI) 13. In this case, the radio device of this embodiment is very small in size and has no output devices such as liquid crystal monitors.

The input device 11 corresponds to status change command transmitting means according to the present invention, and the output device 12 corresponds to a status change command external output means. Further, light emissions from the light emitting diodes correspond to external outputs of changes in status according to the present invention (the status change commands according to this embodiment are realized by introducing new enhanced commands into the Bluetooth standard).

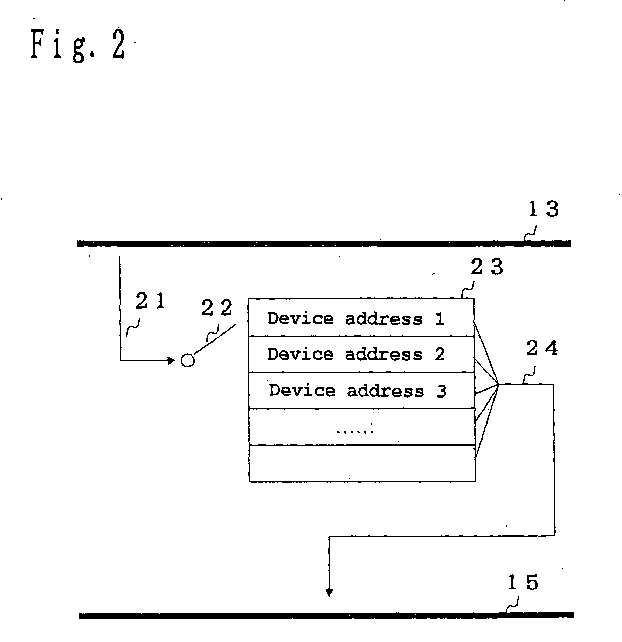

Now, an operation performed by the radio device of this embodiment will be described with reference to Figure 2, a schematic diagram useful in describing a radio connection operation performed by the software section 14. In this regard, while describing the operation of the radio device of this embodiment, an embodiment of a radio communication method according to the present invention will be described.

When a radio device acting as a host is connected by radio to a radio device acting as a target, a procedure similar to the one described above is executed. That is, information on electronic equipment to which a host can be connected is obtained and stored in a database.

However, as previously described, the radio device of this embodiment does not include any liquid crystal monitor that indicates one connectable piece of electronic equipment as a target.

Thus, the software section 14 (see Figure 1) recognizes the device address of apiece of electronic equipment selected by device address selecting means 22, the address being obtained from a connected equipment database 23. The device address selecting means 22 sequentially changes a selection in unison with a signal 21 from the input device 11 provided each time the button or the like is depressed.

Subsequently, the software section 14 sends a signal 24 for a check request to an HCI 15 on the basis of the selected device address. Thus, the radio hardware section 16 (see Figure 1) transmits a radio electric wave to the piece of electronic equipment specified using the device address. Upon receiving the radio electric wave, the electronic equipment changes the status of the output device such as an LED.

At this time, (1) if the LED, the status of which has changed, belongs to the electronic equipment to act as a target, then a hoped radio connection has been established. However, (2) if not, then the device address selected from the connected equipment database 23 is changed until the LED of the electronic equipment to act as a target changes its status.

In this manner, a radio connection to the target can be visually checked (aural checks can be carried out by adapting the output device to provide sonic outputs).

However, at this time, no rigorous radio data links have been built between the host and the electronic equipment specified as a target using a device address. The rigorous radio data link may be built between the electronic equipment acting as host and the electronic equipment acting as a target when these pieces of electronic equipment transmit or receive information to and from each other on the basis of the Bluetooth.

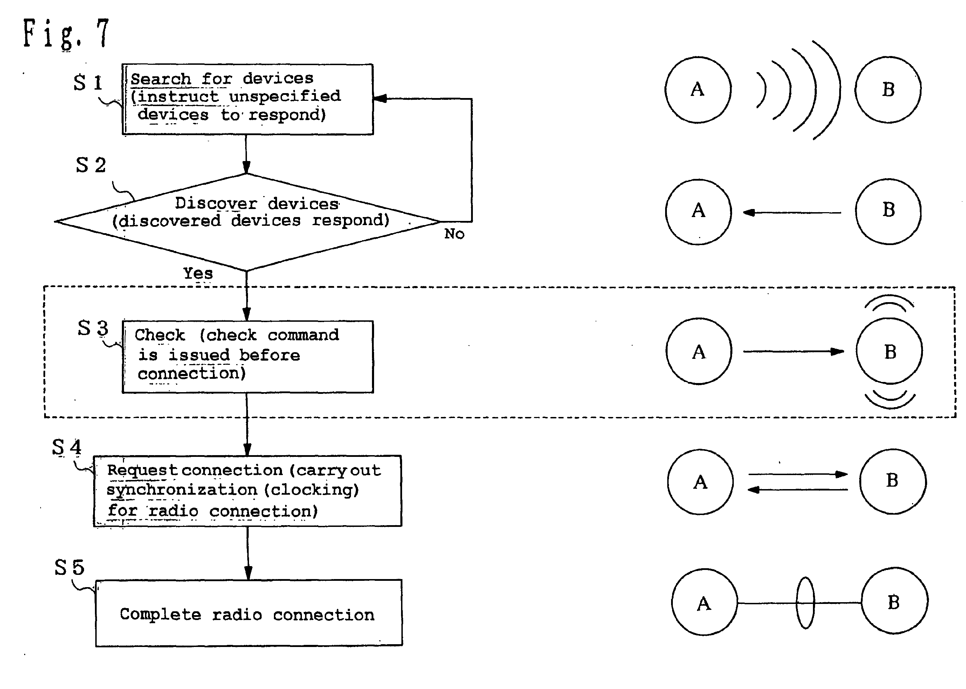

Then, the flow of a procedure executed to build a radio data link between a radio device A to act as a host and a radio device B to act as a slave will be plainly described below with reference to Figure 7 , which is useful in describing a radio connection operation according to Embodiment 1 of the present invention.

Step 1: the radio device A searches for devices and instructs unspecified devices including the radio device B to respond.

Step 2: of the unspecified devices including the radio devices B, discovered devices respond to provide their own address information or the like.

Step 3: before establishing a connection, the radio device A sequentially issues commands to discovered devices to check to which of these devices it is to be connected. The user confirms a change in status of the radio device B and gives an instruction to the radio device A. Then, the radio device A confirms that it is to be connected to the radio device B (this is a characteristic of this embodiment).

Steps 4 and 5: the radio device A sends a request for a connection to the radio device B using the address information on the radio device B, which has already been received by the radio device A as previously described. The radio device A further executes synchronization (clocking) for a radio connection involving frequency hopping. Thus, the radio connection between the radio devices A and B is completed.

Alternatively, the target may be confirmed as described above after once a data link to the electronic equipment specified by a device address has been built. Alternatively, as another implementation method, once data links to all pieces of electronic equipment to which the host can be connected are built, and then device addresses are sequentially selected to confirm the target. Then, unnecessary radio data links are cleared.

Further, in this embodiment described above, the status change commands according to the present invention are provided as radio electric waves by the radio hardware section 16. However, the present invention is not limited to this aspect, but in short, these commands have only to be predetermined signals that change the statuses of all or some of the first radio devices according to the present invention.

Further, in this embodiment, described above, the change in status according to the present invention occurs in light emission from the output device 12 such as a light emitting diode (LED). However, the present invention is not limited to this aspect, the change in status according to the present invention may be effected using all or some of light emission, sound, vibration, or the like. In short, the change in status has only to be externally output by the first radio devices according to the present invention, which have received the status change command.

As described above, according to this embodiment, electronic equipment incorporating a radio device has at least one input device and an output device such as an LED or a sound source. Consequently, electronic equipment acting as a host can reliably identify electronic equipment acting as a target and then establish a radio connection thereto.

### (Embodiment 2)

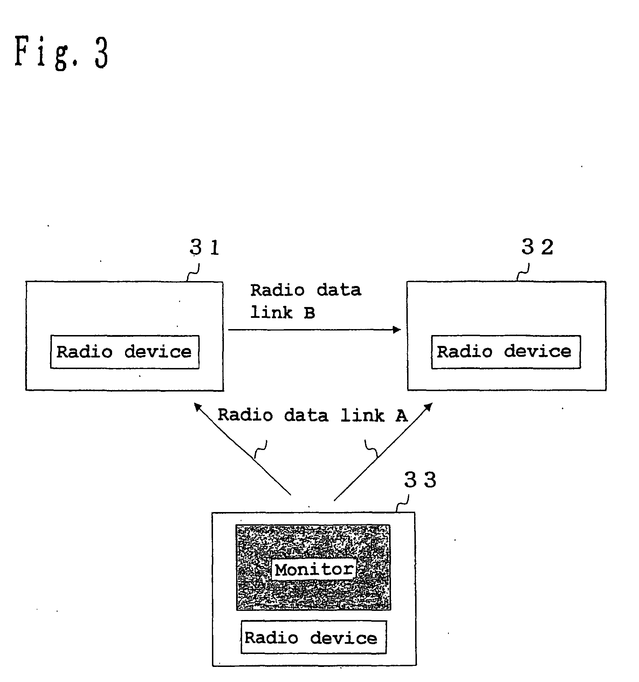

Now, the configurations of pieces of electronic equipment 31 to 33 using radio devices will be described with reference to Figure 3, a schematic diagram useful in describing a radio connection operation according to this embodiment.

In Figure 3 , reference numerals 31 and 32 each denote electronic equipment incorporating a radio device and having no high-performance output devices such as liquid crystal monitors. Reference numeral 33 also denotes electronic equipment incorporating radio equipment but having an output device such as a liquid crystal monitor which displays device-specific information such as device addresses, as well as an input keyboard (not shown) used to identify devices. Of course, the pieces of electronic equipment 31 to 33 each have a radio hardware section that builds a radio data link as described later in detail, as well as a software section (not shown).

The arrow lines in the drawing represent radio data links. These pieces of electronic equipment have host and target relationships according to the directions of the arrows.

The output device of the electronic equipment 33 corresponds to display means according to the present invention. The input keyboard of the electronic equipment 33 corresponds to identifying means according to the present invention. Means including the radio hardware section and software section of the electronic equipment 31 corresponds to identification information input means according to the present invention. Means including the radio hardware section and software section of the electronic equipment 32 corresponds to identification information output means according to the present invention.

Now, operations of the pieces of electronic equipment 31 to 33 using the radio devices will be described. While describing the operations of the pieces of electronic equipment 31 to 33, an embodiment of a radio connection method of the present invention will be described.

If a radio connection is established by using the electronic equipment 31 as a host and the electronic equipment 32 as a target, the electronic equipment 33, which has the output device such as a liquidcrystal monitor , first acts as a host to build a radio data link A to each of the electronic equipment 31 and electronic equipment 32.

The electronic equipment 33 notifies the electronic equipment 31 of information such as device addresses which have been obtained from the pieces of electronic equipment 31 and 32 and which are required for a radio connection. Then, the electronic equipment 31 becomes a host to establish a radio connection using the electronic equipment 32 as a target, thereby building a radio data link B.

Subsequently, both radio data link A using the electronic equipment 33 as a host are cleared to complete the radio connection between the electronic equipment 31 and electronic equipment 32.

Thus, this embodiment is entirely different from a snooping function, i.e. connection status checking function, such as a sniffer in the Ethernet in that the electronic equipment 33 intervenes in the radio connection while meeting the condition that it must establish a master and slave relationship with both electronic equipment 31 and electronic equipment 32.

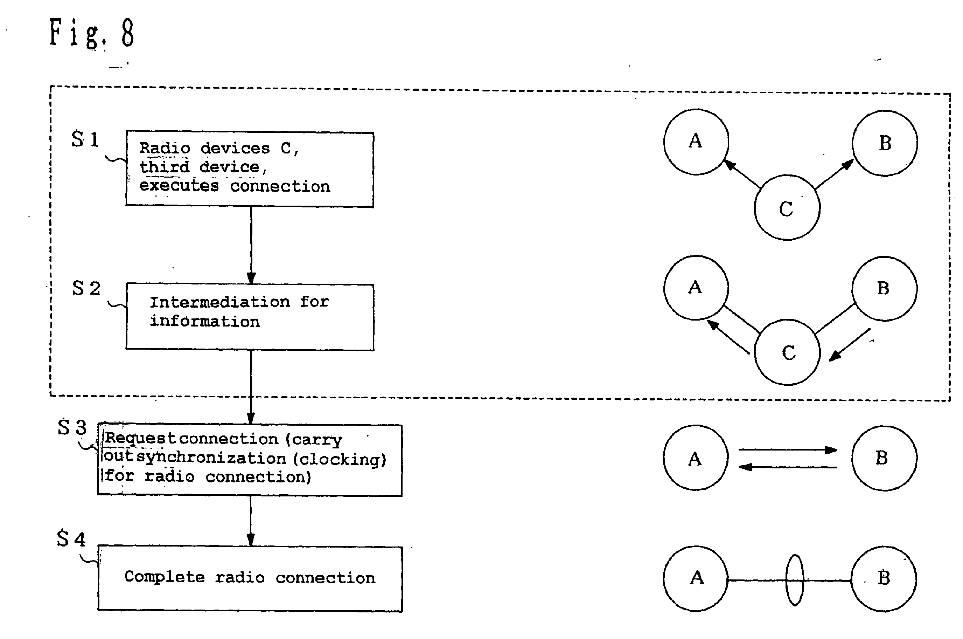

Then, the flow of a procedure executed to build a radio data link between the radio device A to act as a host and the radio device B to act as a slave will be plainly described below with reference to Figure 8, which is useful in describing a radio connection operation according to Embodiment 2 of the present invention.

Steps 1 and 2: the radio device C, a third device, builds radio connections to the radio devices A and B, to which it is to be connected. Then, the radio device C uses these radio connections to obtain address information on the radio device B to act as a slave and notifies the radio device A to act as a host of the obtained address information on the radio device B (this is a characteristic of this embodiment). The radio connections built between the radio devices C and A and between the radio devices C and B, respectively, may be disconnected at any time once such information intermediation has been completed.

Steps 3 and 4: the radio device A uses the received address information on the radio device B to send a request for a connection to the radio device B, and carries out synchronization (clocking) for a radio connection. Thus, a radio connection is completed between the radio devices A and B.

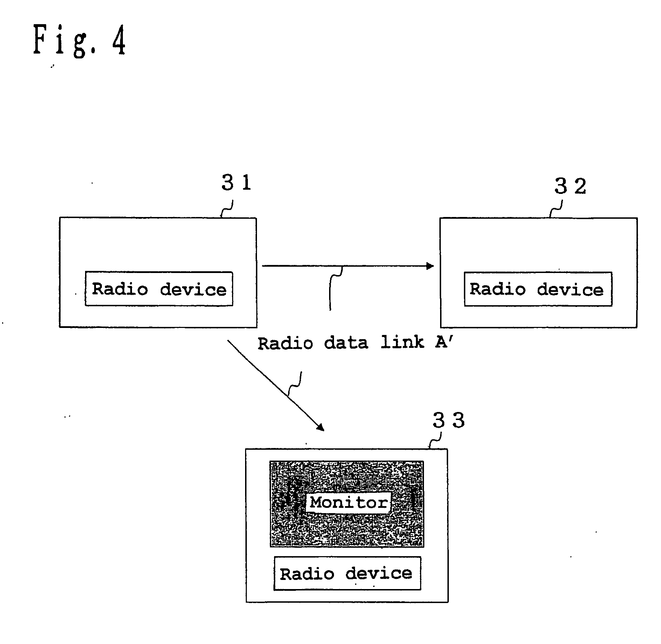

To establish a radio connection using the electronic equipment 31 as a host and the electronic equipment 32 as a target, a similar method may be used as described below. (1) The electronic equipment 33 acts as a host to build a radio data link A described above to each of the electronic equipment 31 and electronic equipment 32. (2) The electronic equipment 31 reverses (switches roll) the master and slave relationship with the electronic equipment 33 to become a host, and rebuilds a radio data link A' to each of the electronic equipment 32 and electronic equipment 33 as shown in Figure 4, a schematic diagram useful in describing a radio connection operation using switch roll. (3) The electronic equipment 31 clears the radio data link to the electronic equipment 33 to complete the radio connection to the electronic equipment 32. In this case, the electronic equipment 33 notifies the electronic equipment 31 of the device address of the electronic equipment 32 before switch roll. Thus, information can be transmitted between the electronic equipment 31 and the electronic equipment 32 on the basis of the Bluetooth.

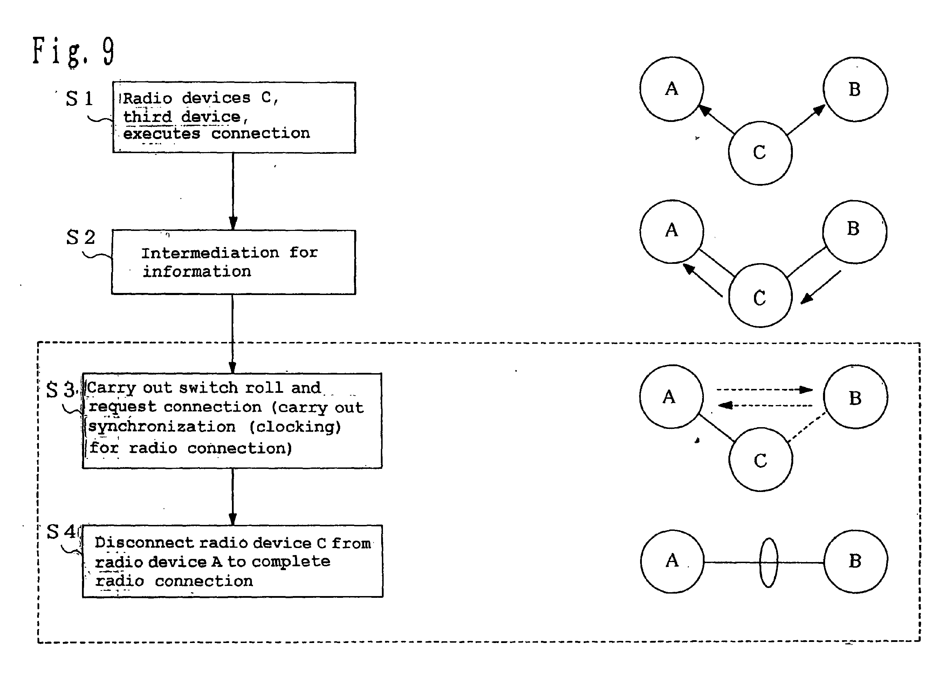

Then, the flow of a procedure executed to build a radio data link between the radio device A to act as a host and the radio device B to act as a slave using switch roll will be described in detail with reference to Figure 9, which is useful in describing a radio connection operation using switch roll.

Steps 1 and 2: the radio device C, a third device, builds a radio connection to each of the radio devices A and B. The radio device C uses these radio connections to obtain address information or the like on the radio device B to act as a slave, and then notifies the radio device A to act as a host of the obtained address information on the radio device B.

Step 3: the radio device A uses the received address information on the radio device B to send a request for a connection to the radio device B, and carries out synchronization (clocking) for a radio connection. The radio device C disconnects its radio connection to the radio device B. Further, the master and slave relationship between the radio devices C and A is reversed on the basis of switch roll (this is a characteristic of this embodiment). However, the transmission of the request from radio device A to radio device B, the disconnection of the radio data link between the radio devices C and B, and the switch roll between the radio devices C and A may be carried out in an arbitrary order.

Step 4 : the radio device A disconnects its radio data link to the radio device C. Thus, a radio connection is completed between the radio devices A and B.

Further, in this embodiment described above, the notification according to the present invention is carried out by using the device address. However, the present invention is not limited to this aspect, but if for example, the device address itself is already stored in the radio device acting as a host, identification information such as a nickname of the radio device may be used.

Further, in this embodiment, described above, the notification according to the present invention is carried out using a radio communication. However, the present invention is not limited to this aspect, but a wired connection may be used.

Furthermore, in this embodiment, described above, the address information on the radio device to act as a target according to the present invention is obtained using the radio connection of the radio device of the electronic equipment 33 to the radio device of the electronic equipment 32. However, the present invention is not limited to this aspect, but the address information on the radio device to act as a target may be obtained beforehand using a CD-ROM or the like.

Moreover, in this embodiment, described above, the device address is displayed. However, the present invention is not limited to this aspect, but if for example, the device address itself is already stored in the radio device acting as a host, identification information such as the name of the user of the radio device or the serial number thereof may be used.

As described above, according to this embodiment, in electronic equipment incorporating a radio device, a third electronic equipment intervenes irrespective of the quality of an input and output devices. Consequently, electronic equipment to act as a host can reliably identify electronic equipment to act as a target for a radio connection.

### (Embodiment 3)

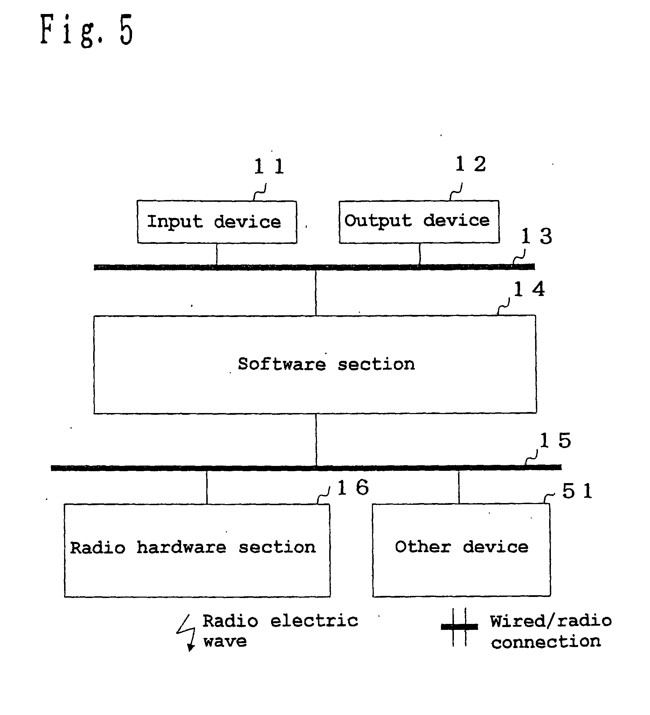

Now, a configuration of a radio device of Embodiment 3 will be described with reference to Figure 5, showing the configuration of this radio device.

The radio device of this embodiment is constructed similarly to the radio device of Embodiment 1. An HCI 15 interface can be used to control other device 51.

Means including other device 51 corresponds to I/O means of the present invention.

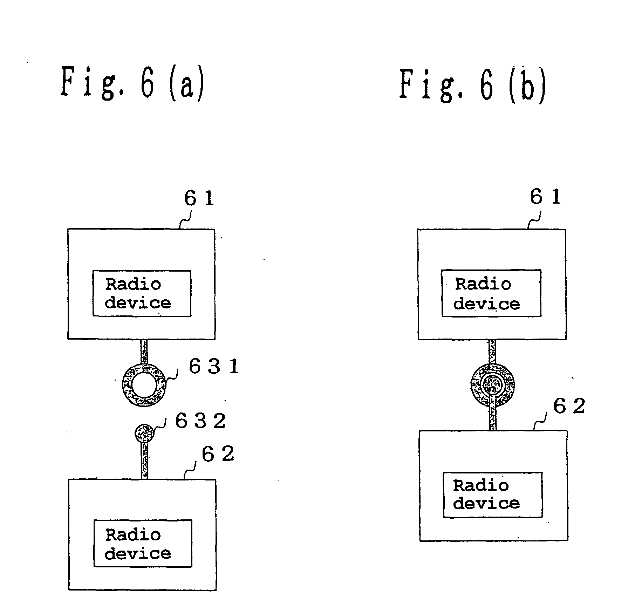

Now, operations of pieces of electronic equipment 61 and 62 using radio devices of this embodiment will be described with reference to Figure 6 (a), a schematic diagram useful in describing the relationship between the equipment 61 and equipment 62, which are not yet connected together, and Figure 6 (b), a schematic diagram useful in describing the relationship between the equipment 61 and equipment 62, which are connected together. While describing the operations of the pieces of electronic equipment 61 and 62, an embodiment of a radio connection method according to the present invention will be described.

In this case, the pieces of electronic equipment 61 and 62 have connection devices 631 and 632, respectively, provided in the other devices, previously described, as means of identifying the target to which the equipment is to be connected, without using the radio hardware 16 (see Figure 5). Connections using the connection devices may be serial, USB (Universal Serial Bus), or other wired connections using transmission of electric signals on the basis of physical contacts, or, IrDA (Infrared Data Association) or other radio connections. In the following description, serial connections will be taken by way of example.

If a radio connection is established using the electronic equipment 61 as a host and the electronic equipment 62 as a target, then the pieces of electronic equipment 61 and 62, separated from each other as shown in Figure 6(a), are connected together on a one-to-one correspondence using the connection devices 631 and 632 as shown in Figure 6(b).

Thus, the electronic equipment 61 acting as a host recognizes the electronic equipment 62 as a target.

Furthermore, the electronic equipment 61, which acts as a host, obtains a device address and other information required for a radio connection, from the electronic equipment 62, which acts as a target, via the connection devices 631 and 632. The electronic equipment 61 stores this information in a database using database means (not shown) such as the one described in Embodiment 1, described above.

Of course, it can be externally determined that this connection may be cleared, for example, causing the host to change the output from the output device such as an LED or effect vibration.

Subsequently, the software section of the host establishes a radio connection to the electronic equipment acting as a target, on the basis of the device address. Thus, information can be transmitted between the electronic equipment 61 and the electronic equipment 62 on the basis of the Bluetooth.

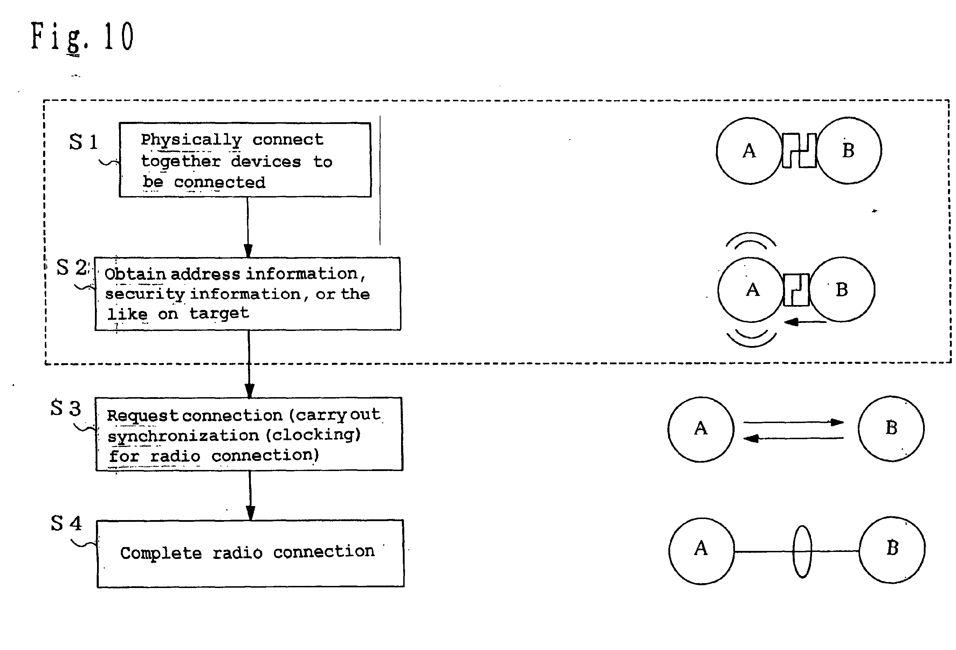

Then, the flow of a procedure executed to build a radio data link between the radio device A to act as a host and the radio device B to act as a slave will be plainly described with reference to Figure 10, which is useful in describing a radio connection operation according to Embodiment 3 of the present invention.

Steps 1 and 2 : the radio devices A and B to be connected together are physically combined together. Then, the radio device A to act as a host uses this connection to obtain address information, security information, or the like on the radio device B to act as a slave (this is a characteristic of this embodiment). Once all required information has been obtained to permit the connection to be cleared, the radio device A may notify the user of this through light emission, sound, vibration, or the like.

Steps 3 and 4: the radio device A uses the address information or the like on the radio device B to send a request for a connection to the radio device B, and carries out synchronization (clocking) for a radio connection. Thus, a radio connection is completed between the radio devices A and B.

The above change of the output device may be effected in at least one of the pieces of electronic equipment 61 and 62 in order to externally indicate the progress of wired or radio transfer of information such as a device address.

Further, the input of identification information on the radio connection target and/or the output of identification information on the self may be carried out using a removable memory such as an SD card.

The flow of a procedure executed to build a radio data link between the radio device A to act as a host and the radio device B to act as a slave using an SD card will be described in detail with reference to Figure 10, which is useful in describing a radio connection operation using an SD card.

Steps 1 and 2: the radio device B to act as a slave writes its own address information, security information, or the like in the installed SD card. Then, when the user installs the SD card containing the address information, security information, or the like on the radio device B, in the radio device A to act as a host, the radio device A reads the information from the card and then clears a memory in the SD card (this is a characteristic of this embodiment).

Steps 3 and 4 : the radio device A uses the read address information or the like on the radio device B to send a request for a connection to the radio device B, and carries out synchronization (clocking) for a radio connection. Thus, a radio connection is completed between the radio devices A and B.

It is ensured that the above information is obtained because the memory is cleared after the read as previously described to prevent information on plural pieces of radio equipment from being written in the SD card, thereby exclusively controlling writes/reads. Further, with a removable medium such as an SD card, a radio connection can be easily established between two radio devices even if they are difficult to carry.

Embodiments 1 to 3 have been described above in detail.

In the above described embodiments, the radio connection according to the present invention is established between the two radio devices. However, the present invention is not limited to this aspect, but radio connections may be established between two or more radio devices.

Further, in the above described embodiments, the radio connection according to the present invention is established using the Bluetooth. However, the present invention is not limited to this aspect, but a low-power and high-frequency short distance radio connection based on, for example, 802.11b may be used. Furthermore, the radio connection according to the present invention may allow bidirectional communications to be carried out between the host and the target.

Furthermore, in Embodiment 1 described above, the status change commands according to the present invention are realized by introducing the new enhanced command into the Bluetooth standard. However, the present invention is not limited to this aspect, but Remote_name_Request, an existing command for obtaining the equipment name of the target device, or the like may be used.

Moreover, the present invention provides a program allowing a computer to execute the functions of all or some means (or devices, elements, circuits, or sections) of the radio system and device of the present invention described above, and cooperating with the computer. Of course, the computer is not limited to pure hardware such as a CPU but may be firmware, an OS, or a peripheral device.

Further, the present invention provides a program allowing the computer to execute the operations of all or some steps (or operations or effects) of the radio connection method of the present invention described above, and cooperating with the computer.

"Some means (or devices, elements, circuits, or sections)" and "some steps (or operations or effects)" according to the present invention mean some of the plurality of means or steps or some functionsor some operations of one means or step.

Further, "some devices (or elements, circuits, or sections)" according to the present invention means some of the plurality of devices, some means (or elements, circuits, or sections) of one device, or some functions of one means.

Furthermore, the present invention also includes a computer readable recording medium on which the program of the present invention is recorded. Moreover, according to an aspect of the program of the present invention, the program may be recorded on a computer readable recording medium and may cooperate with the computer. Further, according to an aspect of the program of the present invention, the program may be transmitted through a transmission medium and may be read by and cooperate with the computer. Furthermore, the recording medium may include a ROM or the like, and the transmission medium may include the Internet, light, electric wave, or sound wave or the like.

The arrangements of the present invention may be implemented by using software or hardware.

Further, the present invention provides a medium carrying a program allowing the computer to execute all or some functions of all or some means of the radio system and device of the present invention described above, the program being read by the computer to cooperate with the computer in executing the above functions.

Furthermore, the present invention provides a medium carrying a program allowing the computer to execute all or some operations of all or some steps of the radio connection method of the present invention described above, the program being read by the computer to cooperate with the computer in performing the above operations.

As described above, according to the present invention, electronic equipment incorporating a radio device to act as a host can reliably identify electronic equipment also incorporating a radio device to act as a target, and can promptly establish a radio connection, even though their input and output devices are simple because of a size reduction.

### Industrial Applicability

As is apparent from the above description, the present invention has an advantage of being able to simply and reliably establish a radio connection between radio devices.

## Claims

1. A radio system comprising:
a plurality of first radio devices that have statuses thereof changed at the time of receiving a predetermined signal; and
a second radio device that has status change command transmitting means of sequentially transmitting a status change command for causing said statuses changed, as said predetermined signal, to all or some of said plurality of first radio devices, in order to establish a radio connection,
wherein said status changes are externally output by said first radio devices receiving said status change command, and
a first radio device to act as a target of said radio connection is determined on the basis of information related to said externally output status changes.

2. The radio system according to Claim 1,
wherein said status changes are externally output byusingall or some of light emission, sound, and vibration, and
said related information is a command from an operator recognizing all or some of the light emission, sound, and vibration.

3. The radio system according to Claim 1, comprising database means of storing identification information on all or some of said plurality of first radio devices, in a database,
wherein said status change command is sequentially transmitted by sequentially changing the first radio device to which said status change command is transmitted, on the basis of said identification information stored in the database.

4. A radio device, comprising status change command transmitting means of sequentially transmitting, to all or some of a plurality of first radio devices having statuses thereof changed at the time of obtaining a predetermined signal, a status change command for causing said statuses changed, as a predetermined signal, in order to establish a radio connection,
wherein said status changes are externally output by said first radio devices receiving said status change command, and
a first radio device to act as a target of said radio connection is determined on the basis of information related to said externally output status changes.

5. A radio device to receive a status change command sequentially transmitted, in order to establish a radio connection, as a predetermined signal by a second radio device to all or some of a plurality of radio devices having statuses thereof changed at the time of obtaining said predetermined signal;
comprising status change externally output means of externally outputting said status changes, when said status change command being received, and
wherein a radio device to act as a target of said radio connection is determined on the basis of information related to said externally output status changes.

6. A radio system comprising:
a plurality of radio devices allowing a radio connection to be established; and
a first radio device having display means of displaying identification information on said plurality of radio devices allowing a radio connection to be established, and identifying means of identifying, of said plurality of radio devices allowing a radio connection to be established, radio devices on which said radio connection is carried out, on the basis of said displayed identification information,
wherein said first radio device provides a notice relating to execution of said radio connection, to all or some of said identified radio devices on which the radio connection is carried out.

7. The radio system according to Claim 6,
wherein said radio devices on which said radio connection is carried out are a radio device to act as a host and a radio device to act as a target,
said identification information has at least address information, and
said notice relating to said execution of said radio connection is a notice to said radio device to act as a host of address information on said radio device to act as a target, provided using said radio connection from said first radio device to said radio device to act as a host.

8. The radio system according to Claim 7, wherein said address information on said radio device to act as a target is obtained using said radio connection from said first radio device to said radio device to act as a target.

9. The radio system according to Claim 8, wherein after the notice of said address information on said radio device to act as a target has been provided, a switch roll is carried out between said first radio device and said radio device to act as a host in order to reverse a master and slave relationship.

10. A radio device comprising:
display means of displaying identification information on a plurality of radio devices allowing a radio connection to be established; and
identifying means of identifying, of said plurality of radio devices allowing a radio connection to be established, radio devices on which said radio connection is carried out, on the basis of said displayed identification information,
wherein a notice relating to execution of said radio connection is provided to all or some of said identified radio devices on which the radio connection is carried out.

11. A radio device comprising identification information input means in order to receive an input of identification information on radio devices on which a radio connection thereto is carried out, from a first radio device that causes said radio connection to be carried out on all or some of a plurality of radio devices allowing a radio connection to be established.

12. A radio device, comprising identification information output means of outputting its own identification information, to a first radio device that causes a radio connection to be carried out on all or some of a plurality of radio devices allowing a radio connection to be established.

13. A radio system comprising, of a plurality of radio devices allowing a radio connection to be established, a plurality of radio devices, each of which has I/O means of outputting its own identification information and/or receiving an input of identification information on a target on which a radio connection is to be carried out, using a connection based on a method different from said radio connection,
wherein said connection based on said different method is used to start said radio connection.

14. The radio system according to Claim 13,
wherein said plurality of radio devices allowing a radio connection to be established are a radio device to act as a host and a radio device to act as a target,
I/O means possessed by said radio devices to act as a target outputs its own identification information,
I/O means possessed by said radio device to act as a host receives an input of identification information on said radio device to act as a target, and
said radio device to act as a host and/or said radio device to act as a target has display means of externally displaying progress of input or output of identification information through said connection based on said different method.

15. The radio system according to Claim 13, wherein said I/O means (1) carries out said output using a write of said its own identification information in a removable memory and/or (2)carries out said input using a read of identification information on said target radio device which has been written in said removable memory.

16. A radio device comprising I/O means of receiving an input of identification information on a target to which a radio connection is to be established, of a plurality of radio devices allowing a radio connection to be established and/or outputting its own identification information, by using a connection based on a method different from said radio connection,
wherein said connection based on said different method is used to start said radio connection.

17. The radio device according to Claim 16,
wherein said I/O means receives at least an input of identification information on said target on which said radio connection is to be carried out, and
comprising database means of storing, in a database, identification information on all or some of said plurality of radio devices allowing a radio connection to be established, and
said input identification information is stored in said database.

18. A radio connection method comprising a step of sequentially transmitting, to all or some of a plurality of first radio devices having statuses thereof changed at the time of obtaining a predetermined signal, a status change command for causing said statuses changed, as a predetermined signal, in order to establish a radio connection,
wherein said status changes are externally output by said first radio devices receiving said status change command, and
a first radio device to act as a target of said radio connection is determined on the basis of information related to said externally output status changes.

19. A radio connection method comprising:
a first step of receiving a status change command sequentially transmitted, in order to establish a radio connection, as a predetermined signal by a second radio device to all or some of a plurality of radio devices having statuses thereof changed at the time of obtaining said predetermined signal and,
a second step of externally outputting said status changes when said status change command is received,
wherein a first radio device to act as a target of said radio connection is determined on the basis of information related to said externally output status changes.

20. A radio connection method comprising:
a first step of displaying identification information on a plurality of radio devices allowing a radio connection to be established;
a second step of identifying, of said plurality of radio devices allowing a radio connection to be established, radio devices on which said radio connection is carried out, on the basis of said displayed identification information; and
a third step of providing a notice relating to execution of said radio connection to all or some of said identified radio devices on which the radio connection is carried out.

21. A radio connection method comprising a step of receiving, from a first radio device that causes said radio connection to be carried out on all or some of a plurality of radio devices allowing a radio connection to be established, an input of identification information on radio devices on which said radio connection thereto is carried out.

22. A radio connection method comprising a step of outputting its own identification information, to a first radio device that causes a radio connection to be carried out on all or some of a plurality of radio devices allowing a radio connection to be established.

23. A radio connection method comprising a step of receiving an input of identification information on a target on which a radio connection is to be carried out, of a plurality of radio devices allowing a radio connection to be established, and/or outputting its own identification information, by using a connection based on a method different from said radio connection,
wherein said connection based on said different method is used to start said radio connection.

24. A program allowing a computer to execute all or a part of the step of sequentially transmitting, to all or some of a plurality of first radio devices having statuses thereof changed at the time of obtaining a predetermined signal, a status change command for causing said statuses changed, as a predetermined signal, in order to establish a radio connection, the step belonging to a radio connection method according to Claim 18.

25. A program allowing a computer to execute all or a part of the first step of receiving a status change command sequentially transmitted, in order to establish a radio connection, as a predetermined signal by a second radio device to all or some of a plurality of radio devices having statuses thereof changed at the time of obtaining said predetermined signal, and of the second step of externally outputting said status changes when said status change command is received, the first and second steps belonging to a radio connection method according to Claim 19.

26. A program allowing a computer to execute all or a part of the first step of displaying identification information on a plurality of radio devices allowing a radio connection to be established, of the second step of identifying, of said plurality of radio devices allowing a radio connection to be established, radio devices on which said radio connection is carried out, on the basis of said displayed identification information, and of the third step of providing a notice relating to execution of said radio connection to all or some of said identified radio devices on which the radio connection is carried out, the first, second, and third steps belonging to a radio connection method according to Claim 20.

27. A program allowing a computer to execute all or a part of the step of receiving, from a first radio device that causes said radio connection to be carried out on all or some of a plurality of radio devices allowing a radio connection to be established, an input of identification information on radio devices on which said radio connection thereto is carried out, the step belonging to a radio connection method according to Claim 21.

28. A program allowing a computer to execute all or a part of the step of outputting its own identification information, to a first radio device that causes a radio connection to be carried out on all or some of a plurality of radio devices allowing a radio connection to be established, the step belonging to a radio connection method according to Claim 22.

29. A program allowing a computer to execute all or a part of the step of receiving an input of identification information on a target on which a radio connection is to be carried out, of a plurality of radio devices allowing a radio connection to be established, and/or outputting its own identification information, by using a connection based on a method different from said radio connection, the step belonging to a radio connection method according to Claim 23.

30. A computer processed medium carrying a program allowing a computer to execute all or a part of the step of sequentially transmitting, to all or some of a plurality of first radio devices having statuses thereof changed at the time of obtaining a predetermined signal, a status change command for causing said statuses changed, as a predetermined signal, in order to establish a radio connection, the step belonging to a radio connection method according to Claim 18.

31. A computer processed medium carrying a program allowing a computer to execute all or a part of the first step of receiving a status change command sequentially transmitted, in order to establish a radio connection, as a predetermined signal by a second radio device to all or some of a plurality of radio devices having statuses thereof changed at the time of obtaining said predetermined signal, and of the second step of externally outputting said status changes when said status change command is received, the first and second steps belonging to a radio connection method according to Claim 19.

32. A computer processed medium carrying a program allowing a computer to execute all or a part of the first step of displaying identification information on a plurality of radio devices allowing a radio connection to be established, of the second step of identifying, of said plurality of radio devices allowing a radio connection to be established, radio devices on which said radio connection is carried out, on the basis of said displayed identification information, and of the third step of providing a notice relating to execution of said radio connection to all or some of said identified radio devices on which the radio connection is carried out, the first, second, and third steps belonging to a radio connection method according to Claim 20.

33. A computer processed medium carrying a program allowing a computer to execute all or a part of a step of the step of receiving, from a first radio device that causes said radio connection to be carried out on all or some of a plurality of radio devices allowing a radio connection to be established, an input of identification information on radio devices on which said radio connection thereto is carried out, the step belonging to a radio connection method according to Claim 21.

34. A computer processed medium carrying a program allowing a computer to execute all or a part of the step of outputting its own identification information, to a first radio device that causes a radio connection to be carried out on all or some of a plurality of radio devices allowing a radio connection to be establish, the step belonging to a radio connection method according to Claim 22.

35. A computer processed medium carrying a program allowing a computer to execute all or a part of the step of receiving an input of identification information on a target on which a radio connection is to be carried out, of a plurality of radio devices allowing a radio connection to be established, and/or outputting its own identification information, by using a connection based on a method different from said radio connection, the step belonging to a radio connection method according to Claim 23.
